# EUROPEAN PATENT SPECIFICATION

(11) **EP 3 235 619 B1**
(45) Date of publication and mention of the grant of the patent: **13.11.2019**
(21) Application number: 16305475.2
(22) Date of filing: 22.04.2016
(51) Int. Cl.: B29C 44/12, B29C 44/14, B60R 13/00, B29C 69/00

(54) **METHOD FOR MANUFACTURING AN AUTOMOTIVE PART**
VERFAHREN ZUM HERSTELLEN EINES KRAFTFAHRZEUG-AUSSTATTUNGSTEILS
PROCÉDÉ DE FABRICATION D'UNE PIÈCE AUTOMOBILE

(43) Date of publication of application: 25.10.2017
(73) Proprietor: Faurecia Automotive Industrie, 92000 Nanterre (FR)
(72) Inventor: ELSZYN, Lukasz, 59-216 Spalona (PL)
(74) Representative: Lavoix

(56) References cited:
- EP-A1- 1 177 880
- DE-A1- 10 329 182

## Description

The present invention concerns a method for manufacturing an automotive part, comprising:
- providing a first layer on a receiving surface of a first half-mold;
- placing a closing surface of a second half-mold facing the receiving surface to define at least a first part of a molding cavity;
- forming a foam layer in the molding cavity.

Such a method is used in particular for forming mass-spring type soundproof components for motor vehicles.

The document DE 103 29 182 A1 discloses a half-mold for an automotive part and an associated method.

These parts usually comprise a mass layer, which is made of a heavy layer of thermoplastic material, loaded with fillers such as bitumen, chalk or barium sulfate.

The mass layer is assembled on a spring layer which is formed of an open cell foam, in particular a polyurethane foam.

Such parts are usually manufactured by lapping a heavy mass layer on a first half-mold receiving surface. Then, a second half-mold closing surface is placed facing the first half-mold surface to define a molding cavity of a shape complementary to the part. A foam precursor material is injected in the molding cavity defined between the first half mold and the second half mold. An example of such a manufacturing method is given in EP 1 177 880.

Such a method is quite efficient and can adapt to various shapes of automotive parts. Nevertheless, in some cases, the part may be more complex in shape. This is the case in particular when the automotive part is an acoustic dash inner placed on a firewall of a vehicle.

For such parts, the foam layer must be provided with an extension lip along its upper edge to form a joint between the windshield and the firewall.

The foam lip protrudes from the heavy layer. Its width is of a few centimeters to be lodged below the edge of the windshield.

Molds such as disclosed in EP 1 177 880 are not entirely satisfactory for easily forming such a part. Indeed, several steps are needed for manufacturing the complex part.

First, the heavy layer is heated. It is then lapped on a tool having the same shape of a first half mold by vacuuming the gas between the tool and the heavy layer. Afterwards, it is cut at its periphery and if needed, internally using a manual knife or an automatic system.

Then, the cut heavy layer is placed in contact with a first half mold of the foaming mold, the second half mold is closed, and the foam layer is formed between the first half mold and the second half mold.

Finally, the assembly of the heavy layer and of the foam layer is carried to a finishing station comprising a water jet cutting apparatus to finish the edges of the part.

The manufacturing method is therefore particularly complex and expensive to operate.

One aim of the invention is to provide a method for obtaining a complex automotive part by foaming a layer on another layer, at low cost.

To this aim, the invention concerns a method of the above type, characterized in that
- before forming the foam layer, cutting an outer region of the first layer along a cutting edge, the first layer remaining on the receiving surface;
- defining a second part of the molding cavity, extending away from the first layer, beyond the cutting edge, the second part of the molding cavity extending the first part of the molding cavity,
the foam layer forming step comprising filling the first part and the second part of the molding cavity to create the foam layer with a base region adhering on the first layer and a protruding region protruding beyond the first layer from the cutting edge.

The method according to the invention comprises one or more of the following features, taken solely, or according to any possible technical combination:
- the cutting step comprises moving a drawer having a cutter relative to the receiving surface and applying the cutter on the receiving surface to cut the outer region of the first layer;
- the drawer moving step comprises contacting the drawer against the second half-mold and moving the receiving surface relatively to the second half-mold and to the drawer to apply the cutter on the receiving surface;
- during the foam layer forming step, the cutter remains in contact with the receiving surface;
- the drawer comprises a closing region delimiting partly the second part of the molding cavity when the drawer is applied on the second half-mold;
- inserting a retaining member behind the drawer to maintain the drawer applied on the second half-mold during the foam layer forming step;
- the retaining member is jointly movable with the first half-mold;
- the first layer providing step comprises heating the first layer and applying the first layer on the receiving surface, preferably by vacuuming a gas present between the first layer and the receiving surface;
- the first layer is a heavy mass layer preferably made of a thermoplastic olefin and/or of a rubber;
- the forming of the foam layer comprises:
- injecting a precursor material in the molding cavity,
- expanding the precursor material to fill the first part and the second part of the molding cavity; and
- hardening the expanded precursor material.

The invention also concerns an automotive part comprising:
- a first layer and a foam layer assembled on the first layer, the foam layer having a base region adhering on the first layer and a protruding region protruding beyond the base region, the automotive part being susceptible of being manufactured by the method defined above.

The part according to the invention may comprise one or more of the following features, taken solely or according to any possible technical combination:
- the maximum length of the protruding region is greater than 20 mm.

The invention will be better understood, upon reading of the following description, given solely as an example and made in reference to the following drawings in which:
- figure 1 is a partial view, in cross section along a longitudinal plane of a first part according to the invention, placed in an automotive vehicle;
- figures 3 to 5 illustrate successive steps of a first method according to the invention.
- figure 6 illustrates the rear of the mold according to the invention, comprising maintaining members.

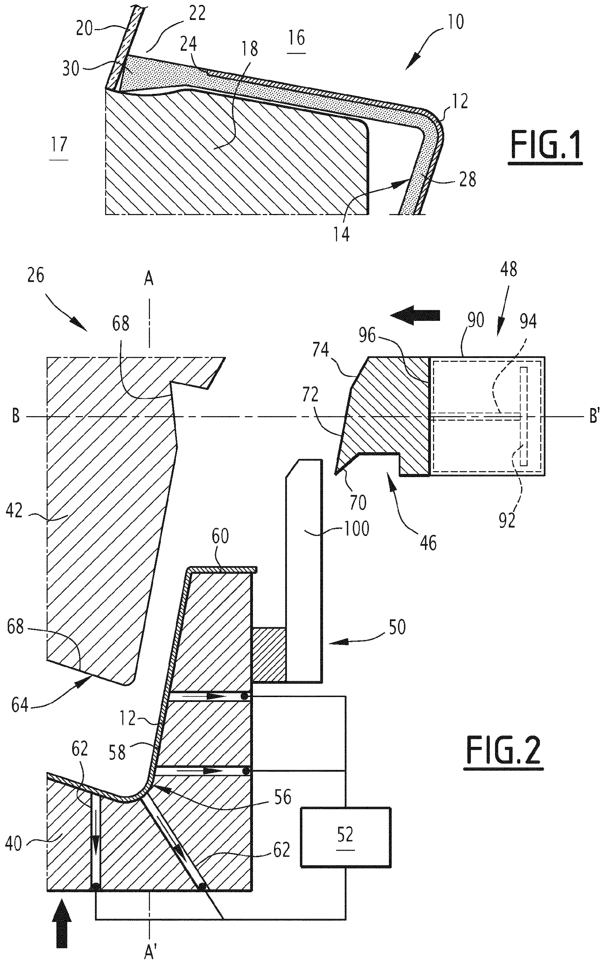

A first automotive part 10 manufactured with the method according to the invention is shown in figure 1.

The part 10 comprises a first layer 12 and a foam layer 14, onto which the first layer 12 is assembled. In the example of figure 1, the part 10 is a sound-proof acoustic component introduced in the interior 16 of a vehicle.

In particular, the part 10 is a front acoustic dash inner placed on the firewall 18 of the vehicle separating the interior 16 of the vehicle from the motor compartment 17. It is affixed and sealed under the windshield window 20 by its protruding foam lip 30 acting as a seal.

Preferentially, the first layer 12 is an impervious heavy mass layer. It is impervious to the passage of air. Its thickness is generally comprised between 0,5 mm and 8 mm.

The heavy mass layer advantageously comprises a thermoplastic material, such as a thermoplastic polyolefin, in particular ethylene vinyl acetate, polyethylene, ethylene propylene diene monomer. It generally incorporates fillers such as bitumen, chalk, or barium sulfate.

The Young's modulus of the first layer 12 is generally lower than 1,000 mPa. Its density is higher or equal than 1,500 kg/m³, preferentially higher than 2,000 kg/m³. It has a surface mass comprised between 0,2 kg/m² and 10kg/m² and preferentially comprised between 0,5 kg/m² and 8 kg/m².

According to the invention, the first layer 12 defines at least one sharp edge 24 which is obtained by cutting the first layer 12 in a mold 26 for forming the foam layer 14, shown in figure 2.

The foam layer 14 is formed on the first layer 12. It is attached to the first layer 12.

The thickness of the foam layer 14 is generally greater than the thickness of the first layer 12. It is comprised for example between 2 mm and 80 mm.

The density of the foam layer 14 is generally greater than 50g/l. It is generally comprised between 35g/l and 120g/l. Its Young's modulus is preferentially below 50KPa.

The foam layer 14 is preferentially porous, and is usually made of open cell foam, for example polyurethane foam.

The foam layer 14 has a greater expanse than the first layer 12. The foam layer 14 hence comprises a base region 28 attached to the first layer 12 and an extension region 30, protruding beyond the base region 28. The protruding region 30 forms a lip, which extends beyond the edge 24 of the first layer 12, as an extension of the base region 28.

The protruding region 30 has a maximum length, taken from the edge 24, which is greater than 25 mm and which is generally comprised between 20 mm and 150 mm.

In the example of figure 1, the protruding region 30 is placed under the windshield window 20. It therefore connects the part 10 to the firewall 18 and to the windshield 20 and contributes to providing a tight seal between the windshield 20 and the firewall 18.

The part 10 is manufactured at least partly in the mold 26 shown in figure 2.

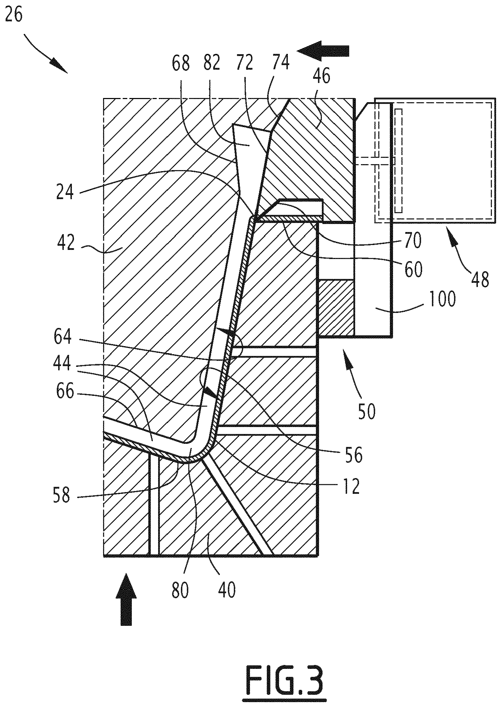

The mold 26 comprises a first half mold 40, and a second half mold 42, the first half mold 40 and the second half mold 42 being movable one relative to another between an open position of the mold 26 shown in figure 2, and a closed position of the mold 26, shown in figure 3, in which they define a molding cavity 44.

The mold 26 further comprises a mobile cutting drawer 46, at least an actuator 48 for moving the drawer 46 between a release position and an active position placed against the second half mold 42.

The mold 26 advantageously comprises a maintaining assembly 50 for maintaining the drawer 46 in the active position, and a vacuum assembly 52 for drawing the first layer 12 against the first half mold 40.

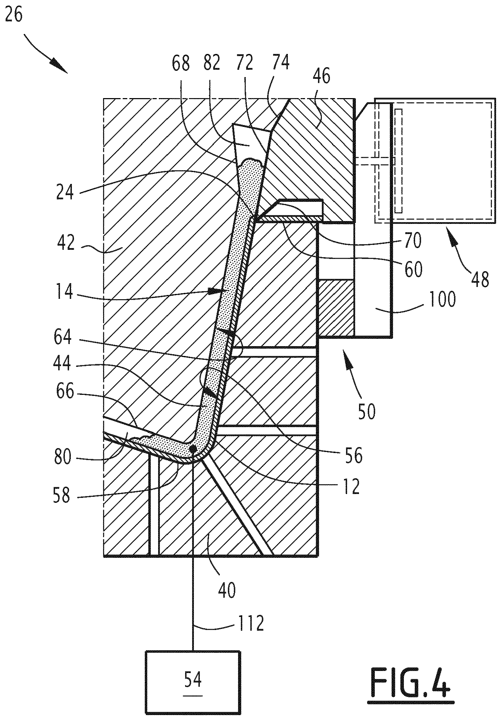

It comprises an injection assembly 54, shown in figure 4, for injecting a precursor material of the foam layer 14 inside the molding cavity 44 when the mold 26 is closed.

The first half mold 40 here has a hollow shape. It defines a receiving surface 56 whose shape is complementary of the shape of the part 10. The receiving surface 56 has a central region 58 onto which the first layer 12 is shaped and an outer cutting region 60 for cooperating with the drawer 46.

In the example of figure 2, the outer cutting region 60 is an upper plane region onto which an edge portion of the first layer 12 is applied.

The first half mold 40 defines a plurality of vacuuming canals 62, connected to the vacuum assembly 52 at the receiving surface 56.

The second half mold 42 here has a protruding shape. It defines a closing surface 64, which is located opposite the receiving surface 56 at a distance of the receiving surface 56 when the mold 26 is closed. The closing surface 64 here defines a first region 66 facing the receiving surface 56 in the closed position of the mold 26 and an extension region 68, located facing the drawer 46, in the active position of the drawer 46.

The first half mold 40 and the second half mold 42 are each able to be heated, in particular at a temperature above 40°C, generally comprised between 50°C and 80°C.

The drawer 46 comprises a sharp cutter 70, intended to cooperate with the outer cutting region 60 of the first half mold 40 and a mold closing surface 72, intended to face the closing surface 64 of the second mold 42, apart from the closing surface 64 when the drawer 46 occupies its active position against the second half mold 42.

The drawer 46 further defines a contact wedge region 74, intended to contact the second half mold 42 and wedge the drawer cutter 70 in contact with the outer cutting region 60.

As shown in figure 3, in the closed position of the mold 26, and in the active position of the drawer 46, the molding cavity 44 has a shape complementary to the shape of the foam layer 14.

The central region 58 of the receiving surface 56 defines with the first region 66 of the closing surface 64 a first part 82 of the molding cavity 44, aimed at forming the base region 28 of the foam layer 14.

The closing region 72 of the drawer 46 defines with the extension region 68 of the closing surface 64, a second part 80 of the molding cavity 44, aimed at forming the protruding region 30 of the foam layer 14.

The mold 26 also defines at least a gas evacuation duct (not shown) connected to the molding cavity 44 to remove the gas generated during foaming.

As shown previously in figure 1, the drawer 46 is mobile between the release position and the active position along a translation axis B-B' which is perpendicular or inclined relative to the axis A-A' of relative displacement between the first half mold 40 and the second half mold 42.

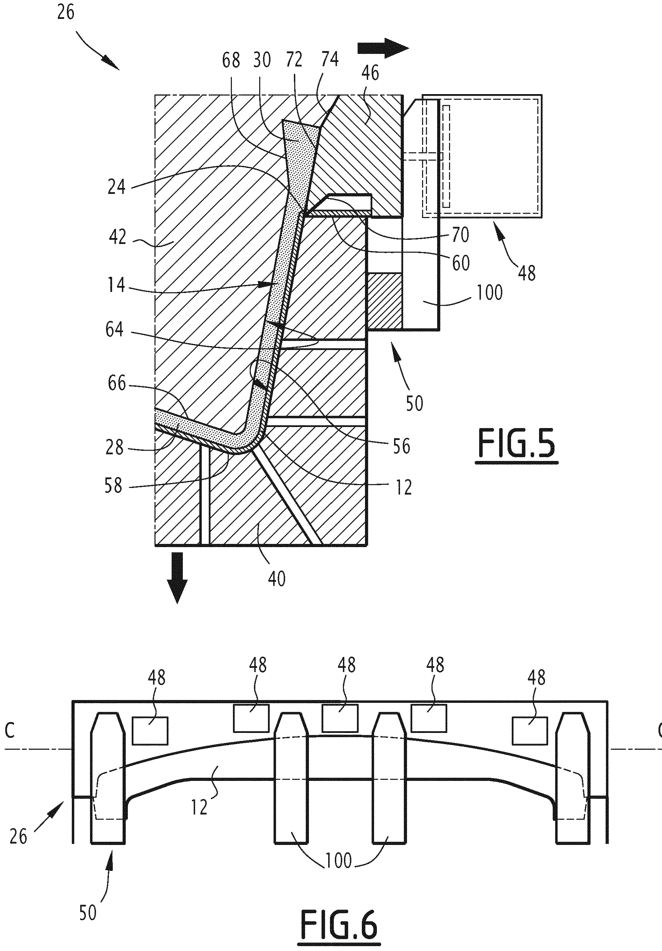

In the example shown in figure 6, the mold 26 comprises a plurality of parallel actuators 48 separated along an axis C-C' of the drawer 46. Each actuator 48 advantageously comprises a chamber 90, a piston 92 located in the chamber 90, and an actuating rod 94 connected to a back surface 96 of the drawer
The actuator 48 is able to be actuated hydraulically or pneumatically to move the drawer 46 from the release position to the active position and maintain to it in the active position.

In the active position shown in figure 3, the rod 94 protrudes out of the chamber 90 and the back surface 96 is located apart from the chamber 90.

The maintaining assembly 50 comprises a plurality of maintaining members 100 intended for applying on the back surface 96 of the drawer 46 to maintain the drawer 46 in the active position.

The maintaining members 100 are here jointly movable with the first half mold 40 relative to the second half mold 46 along axis A-A'. Each maintaining member 100 is here a spindle protruding from the first half-mold 40. Each maintaining member 100 is able to enter an intermediate space delimited between the back surface 96 of the drawer 46 and the actuators 48 when the drawer 46 occupies its active position.

This allows a lighter dimensioning of the actuators 48 and reduces the cost of the mold 26.

The injection assembly 52 for example comprises a vacuum source connected to the canals 62. It is able to vacuum the gas located between the first layer 12 and the receiving surface 56 through the canals 62, to lap the first layer 12 on the receiving surface 56.

The injection assembly 54 comprises at least a precursor material tank and an injection duct 112 emerging in the molding cavity 44.

A first method for manufacturing a part 10 according to the invention will be now described.

Initially, the first layer 12 is heated to a softening temperature at which it is able to be formed on the receiving surface 56 to match the shape of the receiving surface 56. The softening temperature is for example greater than 120°C and comprised between 90°C and 180°C.

The first layer 12 is introduced in the mold 26 and is partially applied on the surface 56. The vacuum assembly 52 is then activated to draw the gas located between the layer 12 and the surface 56 through the vacuuming canals 62.

The first layer 12 adopts the shape of the receiving surface 56. An edge of the first layer 12 is applied on the outer cutting region 60.

Then, the drawer 46 is moved from its release position to its active position along axis B-B'. The wedging surface 74 contacts the second half mold 42 as shown in figure 3.

Then, the first half mold 40 is moved relatively to the second half mold 42 along the first axis A-A' to pass the mold 26 from the opened position to the closed position.

When the first half mold 40 reaches the vicinity of the closed position, the cutter 70 contacts the part of the first layer 12 applied on the outer cutting region 60 and cuts an edge 24 of the first layer 12 by pinching. The maintaining members 100 of the maintaining assembly 50 pass behind the drawer 46 and apply against the back surface 96 of the drawer 46.

Then, as shown in figure 4, the injection assembly 54 is activated to inject a quantity of precursor material in the cavity 44, between the first layer 12 and the closing surface 64 of the second half mold 42.

The precursor material foams into the molding cavity 44 and fills the first part 80 of the cavity 44 and the second part 82 of the molding cavity 80.

The maintaining members 100 oppose the force of expansion of the foaming material which applies on the drawer 46.

The foam hardens, and forms the foam layer 14 with a base region 28 located in the first part 80 of the molding cavity 44 and a protruding region 30 located in the second part 82 of the molding cavity 44. The first layer 12 having been cut by the cutter 70 along the edge 24, the first layer 12 only covers the base region 28 of the foam layer 14. The foam layer 14 has a protruding region 30 which is uncovered.

The mold 26 is then opened and the drawer 46 is passed into its released position by each actuator 48.

The method according to the invention is therefore very simple to carry out in one mold 26. It is able to produce a part 10 having a foam layer 14 with a base region 28 covered with a first layer 12 and a protruding region 30 which extends apart from the first layer 12.

Manufacturing of the part 10 is therefore easy, since it does not require to extract the first layer 12 out of the mold 26 to cut it and then, to reintroduce it in the mold 26. The first layer 12 always stays in the mold 26 and is cut directly in the mold 26, which simplifies the method and increases the productivity. The production cycle is significantly shortened.

The part 10 can then easily be fixed in the automotive vehicle, for example below a windshield window 20 and above a firewall 18.

Thanks to the method according to the invention, the manufacturing cost of the complex part 10 is similar to the cost of a part which does not have a foam protruding region 30.

## Claims

1. Method for manufacturing an automotive part (10), comprising:
- providing a first layer (12) on a receiving surface (56) of a first half-mold (40);
- placing a closing surface (64) of a second half-mold (42) facing the receiving surface (56) to define at least a first part (80) of a molding cavity (44);
- forming a foam layer (14) in the molding cavity (44);
**characterized by**:
- before forming the foam layer (14), cutting an outer region of the first layer (12) along a cutting edge (24), the first layer (12) remaining on the receiving surface (56);
- defining a second part (82) of the molding cavity (44), extending away from the first layer (12), beyond the cutting edge (24), the second part of the molding cavity (44) extending the first part (80) of the molding cavity (44),
the foam layer (14) forming step comprising filling the first part (80) and the second part (82) of the molding cavity (44) to create the foam layer (14) with a base region (28) adhering on the first layer (12) and a protruding region (30) protruding beyond the first layer (12) from the cutting edge (24), the protruding region (30) being uncovered.

2. Method according to claim 1, wherein the cutting step comprises moving a drawer (46) having a cutter (70) relative to the receiving surface (56) and applying the cutter (70) on the receiving surface (56) to cut the outer region of the first layer (12).

3. Method according to claim 2, wherein the drawer (46) moving step comprises contacting the drawer (46) against the second half-mold (42) and moving the receiving surface (56) relatively to the second half-mold (42) and to the drawer (46) to apply the cutter (70) on the receiving surface (56).

4. Method according to any one of claims 2 or 3, wherein during the foam layer (14) forming step, the cutter (70) remains in contact with the receiving surface (56).

5. Method according to any one of claims 2 to 4, wherein the drawer (46) comprises a closing region (72) delimiting partly the second part (82) of the molding cavity (44) when the drawer (46) is applied on the second half-mold (42).

6. Method according to any one of claims 2 to 5, comprising inserting a retaining member (100) behind the drawer (46) to maintain the drawer (46) applied on the second half-mold (42) during the foam layer (14) forming step.

7. Method according to claim 6, wherein the retaining member (100) is jointly movable with the first half-mold (40).

8. Method according to any one of the preceding claims, wherein the first layer (12) providing step comprises heating the first layer (12) and applying the first layer (12) on the receiving surface (56), preferably by vacuuming a gas present between the first layer (12) and the receiving surface (56).

9. Method according to any one of the preceding claims, wherein the first layer (12) is a heavy mass layer preferably made of a thermoplastic olefin and/or of a rubber.

10. Method according to any one of the preceding claims, wherein the forming of the foam layer (14) comprises:
- injecting a precursor material in the molding cavity (44),
- expanding the precursor material to fill the first part (80) and the second part (82) of the molding cavity (44); and
- hardening the expanded precursor material.

## Patentansprüche

1. Verfahren zum Herstellen eines Fahrzeugteils (10), umfassend:
Bereitstellen einer ersten Schicht (12) auf einer Aufnahmefläche (56) einer ersten Formhälfte (40);
Platzieren einer Verschlussfläche (64) einer zur Aufnahmefläche (56) weisenden zweiten Formhälfte (42) zum Definieren mindestens eines ersten Teils (80) einer Formhohlraums (44);
Bilden einer Schaumschicht (14) im Formhohlraum (44);
**gekennzeichnet durch**:
vor dem Bilden der Schaumschicht (14) Schneiden eines äußeren Bereichs der ersten Schicht (12) entlang einer Schnittkante (24), wobei die erste Schicht (12) auf der Aufnahmefläche (56) verbleibt;
Definieren eines zweiten, sich von der ersten Schicht (12) weg hinter der Schnittkante (24) erstreckenden Teils (82) des Formhohlraums (44), wobei der zweite Teil des Formhohlraums (44) den ersten Teil (80) des Formhohlraums (44) erweitert,
wobei der Schritt zum Bilden der Schaumschicht (14) ein Befüllen des ersten Teils (80) und des zweiten Teils (82) des Formhohlraums (44) umfasst, um die Schaumschicht (14) mit einem auf der ersten Schicht (12) haftenden Basisbereich (28) und einem über die erste Schicht (12) von der Schnittkante (24) überstehende vorstehende Bereich (30) zu bilden, wobei der vorstehende Bereich (30) unbedeckt ist.

2. Verfahren nach Anspruch 1, wobei der Schritt des Schneidens ein Bewegen eines ein Schneidelement (70) aufweisenden Schubteils (46) relativ zur Aufnahmefläche (56) und ein Ansetzen des Schneidelements (70) auf die Aufnahmefläche (56) zum Schneiden des Außenbereichs der ersten Schicht (12) umfasst.

3. Verfahren nach Anspruch 2, wobei der Schritt des Bewegens des Schubteils (46) ein Kontaktieren des Schubteils (46) mit der zweiten Formhälfte (42) und ein Bewegen der Aufnahmefläche (56) relativ zur zweiten Formhälfte (42) und zum Schubteil (46) zum Ansetzen des Schneidelements (70) auf die Aufnahmefläche (56) umfasst.

4. Verfahren nach einem der Ansprüche 2 oder 3, wobei das Schneidelement (70) während des Schrittes des Bildens der Schaumschicht (14) in Kontakt mit der Aufnahmefläche (56) verbleibt.

5. Verfahren nach einem der Ansprüche 2 bis 4, wobei das Schubteil (46) einen Verschlussbereich (72) umfasst, der den zweiten Teil (82) des Formhohlraums (44) teilweise abgrenzt, wenn das Schubteil (46) auf die zweite Formhälfte (42) angesetzt wird.

6. Verfahren nach einem der Ansprüche 2 bis 5, umfassend ein Einführen eines Rückhalteelements (100) hinter das Schubteil (46), um ein Ansetzen des Schubteils (46) auf das zweite Formteil (42) während des Schritts zum Bilden der Schaumschicht (14) aufrecht zu erhalten.

7. Verfahren nach Anspruch 6, wobei das Rückhalteelement (100) gemeinsam mit der ersten Formhälfte (40) bewegbar ist.

8. Verfahren nach einem der vorangehenden Ansprüche, wobei der Schritt des Bereitstellens der ersten Schicht (12) ein Aufheizen der ersten Schicht (12) und Auftragen der ersten Schicht (12) auf die Aufnahmefläche (56) umfasst, vorzugsweise durch Absaugen eines zwischen der ersten Schicht (12) und der Aufnahmefläche (56) vorhandenen Gases.

9. Verfahren nach einem der vorangehenden Ansprüche, wobei die erste Schicht (12) eine schwere Masseschicht ist, die vorzugsweise aus thermoplastischem Olefin und/oder einem Gummi gefertigt ist.

10. Verfahren nach einem der vorangehenden Ansprüche, wobei das Bilden der Schaumschicht (14) umfasst:
Einspritzen eines Ausgangsmaterials in den Formhohlraum (44),
Expandieren des Ausgangsmaterials zum Ausfüllen des ersten Teils (80) und des zweiten Teils (82) des Formhohlraums (44); und
Härten des expandierten Ausgangsmaterials.

## Revendications

1. Procédé pour fabriquer une pièce automobile (10) comprenant les étapes consistant à :
prévoir une première couche (12) sur une surface de réception (56) d'un premier demi-moule (40) ;
placer une surface de fermeture (64) d'un second demi-moule (42) faisant face à la surface de réception (56) pour définir au moins une première partie (80) d'une cavité de moulage (44) ;
former une couche de mousse (14) dans la cavité de moulage (44) ;
**caractérisé par** les étapes consistant à :
avant de former la couche de mousse (14), couper une région externe de la première couche (12) le long d'un bord de coupe (24), la première couche (12) restant sur la surface de réception (56) ;
définir une seconde partie (82) de la cavité de moulage (44), s'étendant à distance de la première couche (12), au-delà du bord de coupe (24), la seconde partie de la cavité de moulage (44) prolongeant la première partie (80) de la cavité de moulage (44),
l'étape de formation de couche de mousse (14) comprend l'étape consistant à remplir la première partie (80) et la seconde partie (82) de la cavité de moulage (44) afin de créer la couche de mousse (14) avec une région de base (28) qui adhère sur la première couche (12) et une région en saillie (30) faisant saillie au-delà de la première couche (12) à partir du bord de coupe (24), la région en saillie (30) n'étant pas recouverte.

2. Procédé selon la revendication 1, dans lequel l'étape de coupe comprend l'étape consistant à déplacer un tiroir (46) ayant un dispositif de coupe (70) par rapport à la surface de de réception (56) et appliquer le dispositif de coupe (70) sur la surface de réception (56) afin de couper la région externe de la première couche (12).

3. Procédé selon la revendication 2, dans lequel l'étape de déplacement de tiroir (46) comprend l'étape consistant à mettre en contact le tiroir (46) contre le second demi-moule (42) et déplacer la surface de réception (56) par rapport au second demi-moule (42) et au tiroir (46) afin d'appliquer le dispositif de coupe (70) sur la surface de réception (56).

4. Procédé selon l'une quelconque des revendications 2 ou 3, dans lequel pendant l'étape de formation de couche de mousse (14), le dispositif de coupe (70) reste en contact avec la surface de réception (56).

5. Procédé selon l'une quelconque des revendications 2 à 4, dans lequel le tiroir (46) comprend une région de fermeture (72) délimitant partiellement la seconde partie (82) de la cavité de moulage (44) lorsque le tiroir (46) est appliqué sur le second demi-moule (42).

6. Procédé selon l'une quelconque des revendications 2 à 5, comprenant l'étape consistant à insérer un élément de retenue (100) derrière le tiroir (46) pour maintenir le tiroir (46) appliqué sur le second demi-moule (42) pendant l'étape de formation de couche de mousse (14).

7. Procédé selon la revendication 6, dans lequel l'élément de retenue (100) est conjointement mobile avec le premier demi-moule (40).

8. Procédé selon l'une quelconque des revendications précédentes, dans lequel l'étape de fourniture de première couche (12) comprend l'étape consistant à faire chauffer la première couche (12) et appliquer la première couche (12) sur la surface de réception (56), de préférence en évacuant un gaz présent entre la première couche (12) et la surface de réception (56).

9. Procédé selon l'une quelconque des revendications précédentes, dans lequel la première couche (12) est une couche de masse élevée réalisée de préférence avec une oléfine thermoplastique et/ou un caoutchouc.

10. Procédé selon l'une quelconque des revendications précédentes, dans lequel l'étape consistant à former la couche de mousse (14) comprenant les étapes consistant à :
injecter un matériau précurseur dans la cavité de moulage (44),
faire subir une expansion au matériau précurseur pour remplir la première partie (80) et la seconde partie (82) de la cavité de moulage (44) ; et
faire durcir le matériau précurseur expansé.
